# EUROPÄISCHE PATENTSCHRIFT

(11) **EP 3 167 700 B1**
(45) Veröffentlichungstag und Bekanntmachung des Hinweises auf die Patenterteilung: **25.08.2021**
(21) Anmeldenummer: 16194822.9
(22) Anmeldetag: 20.10.2016
(51) Int. Cl.: A01D 34/00, G05D 1/02

(54) **AUTONOMES ARBEITSGERÄT**
AUTONOMOUS WORK DEVICE
ENGIN DE TRAVAIL AUTONOME

(30) Priorität: 13.11.2015 DE 102015222414
(43) Veröffentlichungstag der Anmeldung: 17.05.2017
(73) Patentinhaber: Robert Bosch GmbH, 70442 Stuttgart (DE)
(72) Erfinder: Biber, Peter, 72119 Poltringen (DE)

(56) Entgegenhaltungen:
- DE-A1-102007 060 056
- DE-A1-102013 212 605
- US-A1- 2013 041 526

## Beschreibung

### Stand der Technik

Es ist bereits ein autonomes Arbeitsgerät, insbesondere ein autonomer Rasenmäher, mit zumindest einer Erfassungsvorrichtung, welche zu einer Erfassung eines initial definierten, temporären Arbeitsbereichs vorgesehen ist, und mit zumindest einer Steuer-und/oder Regeleinheit, welche zu einer zumindest teilweisen Kartierung eines den temporären Arbeitsbereich zumindest im Wesentlichen aufweisenden absoluten Arbeitsbereichs vorgesehen ist, vorgeschlagen worden. Ein autonomes Arbeitsgerät gemäß des Oberbegriffs der Ansprüche 1 und 4 ist im Dokument DE 10 2007 060056 A1 offenbart.

### Offenbarung der Erfindung

Die Erfindung geht aus von einem autonomen Arbeitsgerät, insbesondere von einem autonomen Rasenmäher, mit zumindest einer Erfassungsvorrichtung, welche zu einer Erfassung eines initial definierten, temporären Arbeitsbereichs vorgesehen ist, und mit zumindest einer Steuer- und/oder Regeleinheit, welche zu einer zumindest teilweisen Kartierung eines den temporären Arbeitsbereich zumindest im Wesentlichen aufweisenden absoluten Arbeitsbereichs vorgesehen ist.

Es wird vorgeschlagen, dass die Steuer- und/oder Regeleinheit dazu vorgesehen ist, bei der Kartierung des absoluten Arbeitsbereichs zwischen harten Grenzen des temporären Arbeitsbereichs und weichen Grenzen des temporären Arbeitsbereichs zu unterscheiden. Vorzugsweise wird der temporäre Arbeitsbereich von einem Bediener definiert. Bevorzugt legt auch ein Bediener fest, ob es sich bei einer initial definierten Grenze bzw. einem Teilbereich einer Grenze um eine harte Grenze oder eine weiche Grenze handelt. Besonders bevorzugt wird von der Steuer- und/oder Regeleinheit während der Definition des temporären Arbeitsbereichs eine von einem Bediener hinterlegte Art der Grenze gespeichert. Unter einem "autonomen Arbeitsgerät" soll hier insbesondere ein Gerät verstanden werden, das sich selbsttätig in einem Bereich und/oder in einer Umgebung fortbewegt, orientiert oder navigiert, insbesondere sich nach einem Anlernprozess selbsttätig in einem Bereich und/oder in einer Umgebung fortbewegt und/oder sich orientiert. Der Ausdruck "selbsttätig fortbewegen und/oder orientieren" soll hier insbesondere eine Fortbewegung, eine Orientierung und/oder Navigation des Arbeitsgeräts, insbesondere nach einem Anlernprozess, ohne einen menschlichen Eingriff definieren. Vorzugsweise bewegt sich das autonome Arbeitsgerät nach einem von einem Bediener mit dem autonomen Arbeitsgerät durchgeführten Anlernprozess selbsttätig in einem Bereich und/oder in einer Umgebung fort bzw. orientiert sich selbsttätig in einem Bereich und/oder in einer Umgebung. Das Arbeitsgerät kann hierbei als autonomer Rasenmäher, als autonomer Staubsauger, als autonome Kehrmaschine, als autonomes Transportfahrzeug, als autonomes Fluggerät, als autonomes Agrargerät o. dgl. ausgebildet sein. Bevorzugt ist das autonome Arbeitsgerät als autonomer Rasenmäher ausgebildet, der dazu vorgesehen ist, eine als Rasenfläche ausgebildete Arbeitsfläche und/oder eine als Gartenumgebung ausgebildete Arbeitsumgebung abzufahren und/oder zu bearbeiten. Hierzu weist das autonome Arbeitsgerät besonders bevorzugt eine als Mähwerkeinheit ausgebildete Arbeitsflächenbearbeitungseinheit auf. Die Arbeitsflächenbearbeitungseinheit kann hierbei mittels einer Antriebseinheit, die zumindest zu einem Antrieb einer Fahrwerkseinheit des autonomen Arbeitsgeräts vorgesehen ist, oder mittels einer separaten Mähwerkantriebseinheit, die getrennt von der Antriebseinheit zum Antrieb der Fahrwerkseinheit ausgebildet ist, angetrieben werden.

Ferner soll in diesem Zusammenhang unter einer "Erfassungsvorrichtung" insbesondere eine Vorrichtung verstanden werden, welche zu einer Erfassung zumindest einer Kenngröße eines temporären Arbeitsbereichs vorgesehen ist. Vorzugsweise soll darunter insbesondere eine Vorrichtung verstanden werden, die dazu vorgesehen ist, zumindest eine Kenngröße, welche zu einer Definition des temporären Arbeitsbereichs dient, während einer initialen Definition des temporären Arbeitsbereichs zu erfassen. Bevorzugt soll darunter insbesondere eine Vorrichtung verstanden werden, welche zu einer Erfassung eines Lage- und/oder Formparameters des temporären Arbeitsbereichs vorgesehen ist. Besonders bevorzugt soll darunter insbesondere eine Vorrichtung verstanden werden, die zu einer Erfassung einer insbesondere von einem Bediener vorgegebenen Grenze des temporären Arbeitsbereichs vorgesehen ist. Vorzugsweise weist die Erfassungsvorrichtung dazu insbesondere eine Sensoreinheit auf. Dabei soll unter einer "Sensoreinheit" insbesondere eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, dem Fachmann als sinnvoll erscheinende Sensoreinheiten denkbar. Besonders bevorzugt ist die Erfassungsvorrichtung zu einer Arbeitsbereichserfassung vorgesehen. Dabei soll unter einer "Arbeitsbereichserfassung" insbesondere ein Vorgang verstanden werden, bei dem ein Arbeitsbereich, insbesondere ein temporärer Arbeitsbereich des autonomen Arbeitsgeräts, zumindest teilweise erkannt wird. Vorzugsweise soll darunter insbesondere ein Vorgang verstanden werden, bei dem ein temporärer Arbeitsbereich insbesondere virtuell erfasst wird. Besonders bevorzugt soll darunter insbesondere ein Vorgang verstanden werden, bei dem ein Arbeitsbereich zumindest zweidimensional erfasst und insbesondere eine Grenze des temporären Arbeitsbereichs festgelegt wird. Unter einem "temporären Arbeitsbereich" soll in diesem Zusammenhang insbesondere ein Arbeitsbereich verstanden werden, welcher zumindest grob einen realen Arbeitsbereich des autonomen Arbeitsgeräts definiert. Vorzugsweise soll darunter insbesondere ein initial definierter Arbeitsbereich verstanden werden, welcher von einem Bediener grob festgelegt wird. Vorzugsweise wird der temporäre Arbeitsbereich durch die Definition zumindest einer groben Grenze des temporären Arbeitsbereichs definiert. Dabei soll unter einem "Arbeitsbereich" insbesondere ein Bereich verstanden werden, der eine von dem autonomen Arbeitsgerät zu bearbeitende Fläche definiert. Vorzugsweise ist der Arbeitsbereich von einer zu mähenden Rasenfläche gebildet. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs-und/oder Betriebszustand erfüllt und/oder ausführt.

Des Weiteren soll unter einer "Steuer- und/oder Regeleinheit" insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Das Betriebsprogramm ist hierbei vorzugsweise zu einer Kartierung eines den temporären Arbeitsbereich zumindest im Wesentlichen aufweisenden absoluten Arbeitsbereichs vorgesehen. Unter einer "Kartierung" soll in diesem Zusammenhang insbesondere das Hinterlegen von Grenzdaten und/oder Flächendaten des Arbeitsbereichs verstanden werden. Vorzugsweise soll darunter insbesondere eine zumindest teilweise Erstellung einer virtuellen Karte des Arbeitsbereichs verstanden werden. Dabei soll unter einer "Karte" insbesondere eine, vorzugsweise digitale, Dar-stellung eines Bereichs und/oder einer Umgebung des Arbeitsbereichs verstanden werden. Vorzugsweise soll darunter insbesondere eine topographische Karte verstanden werden, die insbesondere Informationen zu Höhen, Maßstab, Untergrundbeschaffenheiten und/oder möglichen Hindernissen des Arbeitsbereichs umfasst. Grundsätzlich wäre jedoch auch denkbar, dass bei der Kartierung lediglich Navigationsdaten hinterlegt werden, welche für eine Bearbeitung des Arbeitsbereichs angewendet werden können. Unter einem "absoluten Arbeitsbereich" soll in diesem Zusammenhang insbesondere ein während eines regulären Betriebs geltender Arbeitsbereich verstanden werden. Vorzugsweise soll darunter insbesondere ein Arbeitsbereich verstanden werden, welcher an reale Gegebenheiten eines Bereichs und/oder einer Umgebung des Arbeitsbereichs angepasst ist. Besonders bevorzugt soll darunter insbesondere ein korrigierter Arbeitsbereich verstanden werden, bei welchem zumindest Teilbereiche des temporären Arbeitsbereichs abhängig von einer Plausibilitätsprüfung korrigiert wurden. Vorzugsweise soll darunter insbesondere ein Arbeitsbereich verstanden werden, in welchem das autonome Arbeitsgerät in einem regulären Betrieb arbeitet.

Ferner soll in diesem Zusammenhang unter einer "harten Grenze des temporären Arbeitsbereichs" insbesondere zumindest ein Teilbereich einer Grenze des temporären Arbeitsbereichs verstanden werden, welcher von der Steuer- und/oder Regeleinheit als gegeben und unkorrigierbar angesehen wird. Vorzugsweise soll darunter insbesondere zumindest ein Teilbereich einer Grenze des temporären Arbeitsbereichs verstanden werden, welcher zumindest einem Teilbereich einer Grenze des absoluten Arbeitsbereichs entspricht. Besonders bevorzugt soll darunter insbesondere zumindest ein Teilbereich einer Grenze des temporären Arbeitsbereichs verstanden werden, welcher von dem autonomen Arbeitsbereich, insbesondere aufgrund einer daraus resultierenden Gefahr für das autonome Arbeitsgerät, Pflanzen und/oder Personen, nicht überfahren werden darf. Dabei sind verschiedene, einem Fachmann als sinnvoll erscheinende Anwendungen denkbar, insbesondere sollen darunter jedoch Grenzen zu Teichen, Blumenbeeten, Schwimmbädern, Bächen, Straßen oder dergleichen verstanden werden. Unter einer "weichen Grenze des temporären Arbeitsbereichs" soll erfindungsgemäß zumindest ein Teilbereich einer Grenze des temporären Arbeitsbereichs verstanden werden, welcher von der Steuer- und/oder Regeleinheit als grob definierte, korrigierbare Grenze angesehen wird. Vorzugsweise soll darunter insbesondere zumindest ein Teilbereich einer Grenze des temporären Arbeitsbereichs verstanden werden, welcher bei einer Kartierung hinsichtlich ihrer Plausibilität geprüft und gegebenenfalls korrigiert wird. Bevorzugt soll darunter insbesondere zumindest ein Teilbereich einer Grenze des temporären Arbeitsbereichs verstanden werden, welcher bei einer initialen Definition des temporären Arbeitsbereichs zumindest teilweise lediglich in einer Umgebung einer natürlichen Grenze angeordnet ist. Besonders bevorzugt kann die weiche Grenze insbesondere in Bereichen definiert werden, in welchen eine Korrektur durch das autonome Arbeitsgerät selbst möglich ist und die Grenze des temporären Arbeitsbereichs daher, insbesondere zu einer Verringerung eines Aufwands der Definition des temporären Arbeitsbereichs, lediglich grob definiert werden muss. Durch die erfindungsgemäße Ausgestaltung des autonomen Arbeitsbereichs kann insbesondere eine vorteilhaft komfortable und schnelle initiale Definition eines Arbeitsbereichs erreicht werden. Ferner kann dadurch zudem eine vorteilhaft sichere Definition des Arbeitsbereichs erreicht werden. Vorzugsweise können dem autonomen Arbeitsgerät so vorteilhaft Gefahren für das autonome Arbeitsgerät selbst, Pflanzen und/oder Personen angezeigt werden, ohne dabei einen Komfort sowie eine Schnelligkeit bei einer initialen Definition des Arbeitsbereichs unnötig einzuschränken.

Ferner ist erfindungsgemäß vorgesehen, dass die zumindest eine Erfassungsvorrichtung zumindest eine Grenzerfassungseinheit aufweist, welche zu einer Erfassung zumindest einer Kenngröße einer Grenze des absoluten Arbeitsbereichs vorgesehen ist. Vorzugsweise ist die Grenzerfassungseinheit zu einer Erfassung zumindest einer Kenngröße, insbesondere einer Position einer natürlichen Grenze eines Arbeitsbereichs vorgesehen, welche eine Grenze des absoluten Arbeitsbereichs definiert. Bevorzugt ist die Grenzerfassungseinheit zu einer Erfassung zumindest einer Kenngröße, insbesondere einer Position einer Rasengrenze, vorgesehen, welche eine Grenze des absoluten Arbeitsbereichs definiert. Unter einer "Grenzerfassungseinheit" soll in diesem Zusammenhang insbesondere eine Einheit verstanden werden, welche zu einer Erfassung zumindest einer Kenngröße einer, insbesondere natürlichen Grenze vorgesehen ist. Vorzugsweise soll darunter insbesondere eine Einheit verstanden werden, welche zu einer, insbesondere visuellen, Erfassung zumindest einer Kenngröße, vorzugsweise einer Position und besonders bevorzugt eines Verlaufs einer natürlichen Grenze vorgesehen ist. Besonders bevorzugt ist die Grenzerfassungseinheit von zumindest einem Umgebungssensor, insbesondere von mehreren Umgebungssensoren, gebildet. Dabei soll in diesem Zusammenhang unter einer "natürlichen Grenze" insbesondere eine gegebene Grenze verstanden werden, welche in einer Umgebung des Arbeitsbereichs, insbesondere unabhängig von dem autonomen Arbeitsgerät, real vorhanden ist. Bevorzugt soll darunter insbesondere eine Grenze verstanden werden, welche den Arbeitsbereich natürlich begrenzt. Vorzugsweise soll darunter insbesondere eine Grenze verstanden werden, welche durch eine Rasengrenzen, eine Treppenstufe, eine Mauer, einen Zaun, eine Kante vor einem Abgrund und/oder einer anderen, einem Fachmann als sinnvoll erscheinenden Gegebenheit definiert ist. Dadurch kann vorteilhaft zumindest eine Kenngröße einer Grenze des absoluten Arbeitsbereichs erfasst werden. Ferner kann dadurch vorteilhaft eine Grenze des absoluten Arbeitsbereichs definiert werden. Hierdurch kann vorteilhaft eine gezielte Anpassung bzw. Korrektur des temporären Arbeitsbereichs erreicht werden.

Des Weiteren wird vorgeschlagen, dass die Steuer- und/oder Regeleinheit dazu vorgesehen ist, bei einer Kartierung des absoluten Arbeitsbereichs eine weiche Grenze des temporären Arbeitsbereichs zumindest teilweise an eine durch die Grenzerfassungseinheit erfasste Grenze anzupassen. Die Steuer- und/oder Regeleinheit ist dazu vorgesehen, bei einer Kartierung des absoluten Arbeitsbereichs eine weiche Grenze des temporären Arbeitsbereichs durch eine durch die Grenzerfassungseinheit erfasste Grenze zu korrigieren. Bevorzugt wird bei einer Kartierung des absoluten Arbeitsbereichs die weiche Grenze des temporären Arbeitsbereichs durch eine durch die Grenzerfassungseinheit erfasste Grenze ersetzt. Die durch die Grenzerfassungseinheit erfasste Grenze bildet daher insbesondere eine Grenze des absoluten Arbeitsbereichs. Dadurch kann insbesondere eine automatische Anpassung des Arbeitsbereichs erreicht werden. Vorzugsweise kann dadurch vorteilhaft ein Arbeitsbereich an reale Bedingungen angepasst werden. Ferner kann dadurch insbesondere erreicht werden, dass die weichen Grenzen des temporären Arbeitsbereichs, insbesondere von einem Bediener, lediglich grob festgelegt werden müssen. Hierdurch kann insbesondere ein Aufwand bei einer initialen Definition des temporären Arbeitsbereichs gering gehalten werden.

Es wird ferner vorgeschlagen, dass die Steuer- und/oder Regeleinheit dazu vorgesehen ist, bei einer Kartierung des absoluten Arbeitsbereichs eine harte Grenze des temporären Arbeitsbereichs als Grenze des absoluten Arbeitsbereichs zu übernehmen. Vorzugsweise findet an einer harten Grenze des temporären Arbeitsbereichs bei einer Kartierung des absoluten Arbeitsbereichs durch die Steuer- und/oder Regeleinheit keine automatische Korrektur dieser Grenze statt. Bevorzugt kann eine gesamte Grenze des temporären Arbeitsbereichs aus mehreren Teilbereichen von harten Grenzen und/oder weichen Grenzen bestehen. Dadurch kann insbesondere eine vorteilhaft sichere Definition des Arbeitsbereichs erreicht werden. Vorzugsweise können dem autonomen Arbeitsgerät so vorteilhaft Gefahren für das autonome Arbeitsgerät selbst, Pflanzen und/oder Personen angezeigt werden, ohne dabei einen Komfort sowie eine Schnelligkeit bei einer initialen Definition des Arbeitsbereichs unnötig einzuschränken.

Es wird weiter vorgeschlagen, dass das autonome Arbeitsgerät zumindest eine Eingabeeinheit aufweist, welche zu einer manuellen Differenzierung zwischen einer weichen Grenze und einer harten Grenze des initial definierten, temporären Arbeitsbereichs vorgesehen ist. Vorzugsweise findet eine Differenzierung des Grenztyps während der initialen Definition des temporären Arbeitsbereichs statt. Besonders bevorzugt wird während der initialen Definition des temporären Arbeitsbereichs jeweils manuell festgelegt, welchen Grenztyp eine aktuelle Grenze aufweist. Unter einer "Eingabeeinheit" soll in diesem Zusammenhang insbesondere eine Einheit verstanden werden, welche zumindest ein Bedienelement zu einer Informationsaufnahme aufweist. Vorzugsweise weist die Einheit zudem zumindest ein Ausgabeelement, wie beispielsweise ein Display, auf. Dabei soll unter einem "Bedienelement" insbesondere ein Element verstanden werden, das dazu vorgesehen ist, bei einem Bedienvorgang eine Eingabegröße von einem Bediener aufzunehmen. Vorzugsweise ist das Element dazu vorgesehen, insbesondere unmittelbar von einem Bediener kontaktiert zu werden, wobei eine Berührung des Bedienelements sensiert und/oder eine auf das Bedienelement ausgeübte Betätigungskraft sensiert und/oder mechanisch zur Betätigung einer Einheit weitergeleitet wird. Grundsätzlich wäre jedoch auch eine berührungslose Betätigung des Bedienelements denkbar. Die Eingabeeinheit kann grundsätzlich auch zumindest teilweise getrennt von dem autonomen Arbeitsgerät ausgebildet sein bzw. außerhalb eines Gehäuses des autonomen Arbeitsgeräts angeordnet sein. Die Eingabeeinheit kann beispielsweise einen Teil einer Fernbedienung bilden. Dabei wäre zudem auch denkbar, dass die Eingabeeinheit mittels eines externen Geräts, wie insbesondere einem Smartphone und einer darauf installierten App, realisiert ist. Dadurch kann insbesondere eine vorteilhaft komfortable Definition des Arbeitsbereichs erreicht werden. Insbesondere kann dadurch ein vorteilhaft bedienerfreundliches autonomes Arbeitsgerät bereitgestellt werden. Ferner kann dadurch vorteilhaft schnell und einfach zwischen harten Grenzen und weichen Grenzen des temporären Arbeitsgeräts unterschieden werden. Ferner ist insbesondere denkbar, zusätzlich zu einer Definition der harten Grenze, von einem Bediener aus einer Liste möglicher Arten Gefahrenstellen eine Art der Gefahrenstelle abzufragen, welche von der harten Grenze umschlossen werden soll. Diese Liste kann beispielsweise Teiche, Schwimmbäder, Bäche, Blumen, die nicht gemäht werden sollen, oder gefährliches Terrain umfassen. Grundsätzlich wäre dadurch zudem denkbar, dass dem autonomen Arbeitsgerät lediglich die Gefahrenstelle gezeigt werden muss und dieses selbsttätig eine harte Grenze um die Gefahrenstelle erfasst.

Ferner geht die Erfindung von einem Verfahren zum Betrieb eines autonomen Arbeitsgeräts aus. Es wird vorgeschlagen, dass in einer Einlernphase ein einen initial definierten, temporären Arbeitsbereich aufweisender absoluter Arbeitsbereich von dem autonomen Arbeitsgerät selbsttätig zumindest teilweise kartiert wird und während der Kartierung des Arbeitsbereichs zwischen harten Grenzen des temporären Arbeitsbereichs und weichen Grenzen des temporären Arbeitsbereichs unterschieden wird. Dadurch kann insbesondere eine vorteilhaft komfortable und schnelle initiale Definition eines Arbeitsbereichs erreicht werden. Des Weiteren kann dadurch zudem eine vorteilhaft sichere Definition des Arbeitsbereichs erreicht werden, bei der dem autonomen Arbeitsgerät vorteilhaft Gefahren für das autonome Arbeitsgerät selbst, Pflanzen und/oder Personen angezeigt werden können, ohne dabei einen Komfort sowie eine Schnelligkeit bei einer initialen Definition des Arbeitsbereichs unnötig einzuschränken.

Des Weiteren wird vorgeschlagen, dass in einer der Einlernphase vorangehenden initialen Phase der temporäre Arbeitsbereich des autonomen Arbeitsgeräts definiert wird. Vorzugsweise wird der temporäre Arbeitsbereich des autonomen Arbeitsgeräts in der initialen Phase von einem Bediener definiert. Bevorzugt muss eine Grenze, insbesondere eine weiche Grenze, des temporären Arbeitsbereichs dabei lediglich grob von einem Bediener definiert werden. Unter einer "initialen Phase" soll in diesem Zusammenhang insbesondere eine Phase verstanden werden, welche zumindest zu Beginn eines gesamten Betriebs des autonomen Arbeitsgeräts und/oder nach einem Reset-Vorgang des autonomen Arbeitsgeräts durchgeführt wird. Dadurch kann vorteilhaft zu Beginn eines Betriebs des autonomen Arbeitsgeräts ein temporärer Arbeitsbereich des autonomen Arbeitsgeräts definiert werden.

Es wird ferner vorgeschlagen, dass in der initialen Phase zu einer Definition des temporären Arbeitsbereichs das autonome Arbeitsgerät manuell entlang einer Grenze des temporären Arbeitsbereichs navigiert wird. Vorzugsweise wird in der initialen Phase zu einer Definition des temporären Arbeitsbereichs das autonome Arbeitsgerät manuell von einem Bediener entlang einer Grenze des temporären Arbeitsbereichs navigiert. Besonders bevorzugt erfolgt eine Navigation des autonomen Arbeitsgeräts dabei vorzugsweise durch Fernsteuerung, wie insbesondere mittels eines Smartphones und/oder einer anderen, einem Fachmann als sinnvoll erscheinenden Fernsteuerung. Alternativ erfolgt eine Navigation des autonomen Arbeitsgeräts vorzugsweise durch Abschreiten der Grenze des temporären Arbeitsbereichs durch einen Bediener, wobei das autonome Arbeitsgerät dem Bediener dabei automatisch folgt. Hierbei wäre alternativ auch denkbar, dass der Bediener einen Stab oder dergleichen trägt, der von einem Sensor des autonomen Arbeitsgeräts erfasst werden kann, und fährt mit diesem Stab oder dergleichen an den Grenzen entlang. Das autonome Arbeitsgerät folgt dem Stab zumindest grob, wobei er insbesondere innerhalb der von dem Bediener aufgezeigten Grenze bleibt. Alternativ erfolgt eine Navigation des autonomen Arbeitsgeräts vorzugsweise durch Schieben des autonomen Arbeitsgeräts entlang einer Grenze des temporären Arbeitsbereichs, insbesondere beispielsweise mit einer Schubstange. Dadurch kann vorteilhaft schnell und einfach der temporäre Arbeitsbereich definiert werden. Ferner kann der temporäre Arbeitsbereich dadurch vorteilhaft zuverlässig von dem autonomen Arbeitsgerät erfasst werden.

Es wird weiter vorgeschlagen, dass in der initialen Phase manuell eine Grenze des temporären Arbeitsbereichs als weiche Grenze oder als harte Grenze definiert wird. Vorzugsweise wird in der initialen Phase manuell von einem Bediener eine Grenze des temporären Arbeitsbereichs als weiche Grenze oder als harte Grenze definiert. Bevorzugt legt ein Bediener in der initialen Phase fest, ob es sich bei einer initial definierten Grenze bzw. einem Teilbereich einer Grenze um eine harte Grenze oder eine weiche Grenze handelt. Besonders bevorzugt wird von der Steuer- und/oder Regeleinheit während der Definition des temporären Arbeitsbereichs eine von einem Bediener hinterlegte Art der Grenze gespeichert. Eine Wahl bzw. eine Definition der Art der Grenze erfolgt dabei vorzugsweise über die Eingabeeinheit. Dadurch kann insbesondere eine vorteilhaft komfortable Definition des Arbeitsbereichs erreicht werden. Insbesondere kann dadurch ein vorteilhaft bedienerfreundliches autonomes Arbeitsgerät bereitgestellt werden. Ferner kann dadurch zudem eine vorteilhaft sichere und schnelle Definition des Arbeitsbereichs erreicht werden, bei der dem autonomen Arbeitsgerät vorteilhaft Gefahren angezeigt werden können, ohne dabei einen Komfort sowie eine Schnelligkeit bei einer initialen Definition des Arbeitsbereichs unnötig einzuschränken.

Erfindungsgemäß ist vorgesehen, dass das autonome Arbeitsgerät zumindest in der Einlernphase eine weiche Grenze des temporären Arbeitsbereichs bei einer Kartierung der Grenze des absoluten Arbeitsbereichs selbsttätig korrigiert. Vorzugsweise prüft das autonome Arbeitsgerät die weiche Grenze bei einer Kartierung hinsichtlich Ihrer Plausibilität und korrigiert diese gegebenenfalls. Bevorzugt korrigiert das autonome Arbeitsgerät eine weiche Grenze des temporären Arbeitsbereichs bei einer Kartierung der Grenze des absoluten Arbeitsbereichs selbsttätig sowohl in der Einlernphase als auch zumindest teilweise in einem regulären Betrieb. Darunter, dass die "weiche Grenze des temporären Arbeitsbereichs korrigiert wird", soll in diesem Zusammenhang insbesondere verstanden werden, dass die weiche Grenze des temporären Arbeitsbereichs zumindest teilweise an eine natürliche Grenze in einem Nahbereich der weichen Grenze angepasst wird. Vorzugsweise wird die weiche Grenze bei einer Kartierung des absoluten Arbeitsbereichs durch eine durch die Grenzerfassungseinheit erfasste Grenze, die insbesondere in einem Nahbereich der weichen Grenze liegt, korrigiert bzw. ersetzt. Vorzugsweise wird dabei überprüft, ob eine natürliche Grenze in einem Nahbereich der weichen Grenze existiert. Ist dies der Fall, wird die weiche Grenze, insbesondere bei der Kartierung des absoluten Arbeitsbereichs, insbesondere durch die natürliche Grenze korrigiert bzw. ersetzt. Ist dies nicht der Fall, wird die weiche Grenze insbesondere als Grenze des absoluten Arbeitsbereichs beibehalten. Dadurch kann insbesondere eine automatische Anpassung des Arbeitsbereichs erreicht werden. Ferner kann dadurch insbesondere erreicht werden, dass das autonome Arbeitsgerät selbsttätig aus einer ungenauen Grenze, welche insbesondere von einem Bediener vorgegeben wird, eine genaue Grenze erzeugt wird.

Ferner wird vorgeschlagen, dass das autonome Arbeitsgerät zumindest in der Einlernphase eine Grenze des absoluten Arbeitsbereichs in einem Nahbereich der weichen Grenze des temporären Arbeitsbereichs an eine natürliche Grenze anpasst. Vorzugsweise passt das autonome Arbeitsgerät eine Grenze des absoluten Arbeitsbereichs in einem Nahbereich der weichen Grenze des temporären Arbeitsbereichs in der Einlernphase sowie zumindest teilweise in einem regulären Betrieb an eine natürliche Grenze an. Unter einem "Nahbereich" soll in diesem Zusammenhang insbesondere ein Bereich verstanden werden, welcher eine nahe Umgebung der weichen Grenze definiert. Vorzugsweise soll darunter insbesondere ein Bereich verstanden werden, dessen Quererstreckung sich, insbesondere auf beiden Seiten, senkrecht zu einem Verlauf der weichen Grenzen erstreckt. Eine Quererstreckung beträgt dabei insbesondere maximal 5 m, vorzugsweise maximal 3 m und besonders bevorzugt maximal 2 m. Vorzugsweise beträgt die Quererstreckung dabei insbesondere mehr als 10 cm, vorzugsweise mehr als 30 cm und besonders bevorzugt mehr als 50 cm. Grundsätzlich wäre jedoch auch denkbar, dass die Quererstreckung des Nahbereichs von einem Bediener, insbesondere frei oder in einem begrenzten Bereich frei, eingestellt werden kann. Dadurch kann vorteilhaft ein absoluter Arbeitsbereich des autonomen Arbeitsgeräts an reale Bedingungen angepasst werden. Ferner kann dadurch insbesondere erreicht werden, dass die weichen Grenzen des temporären Arbeitsbereichs, insbesondere von einem Bediener, lediglich grob festgelegt werden müssen. Hierdurch kann insbesondere ein Aufwand bei einer initialen Definition des temporären Arbeitsbereichs gering gehalten werden.

Des Weiteren wird vorgeschlagen, dass das autonome Arbeitsgerät zumindest in der Einlernphase eine harte Grenze des temporären Arbeitsbereichs als Grenze des absoluten Arbeitsbereichs übernimmt. Dadurch kann insbesondere eine vorteilhaft sichere Definition des Arbeitsbereichs erreicht werden. Vorzugsweise können dem autonomen Arbeitsgerät so vorteilhaft Gefahren angezeigt werden und ein Überschreiten bestimmter Grenzen zuverlässig verhindert werden, ohne dabei einen Komfort sowie eine Schnelligkeit bei einer initialen Definition des Arbeitsbereichs unnötig einzuschränken.

Das erfindungsgemäße autonome Arbeitsgerät sowie das erfindungsgemäße Verfahren werden durch die angehängte Ansprüche definiert.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes autonomes Arbeitsgerät mit einer Erfassungsvorrichtung und mit einer Steuer- und Regeleinheit in einer schematischen Darstellung,
- Fig. 2: einen Garten mit einem temporären Arbeitsbereich, das erfindungsgemäße autonome Arbeitsgerät und einen Bediener in einer initialen Phase in einer schematischen Darstellung,
- Fig. 3: den Garten mit einem absoluten Arbeitsbereich und das erfindungsgemäße autonome Arbeitsgerät in einer Einlernphase in einer schematischen Darstellung und
- Fig. 4: ein Ablaufdiagramm eines Verfahrens zum Betrieb des erfindungsgemäßen autonomen Arbeitsgeräts.

### Beschreibung des Ausführungsbeispiels

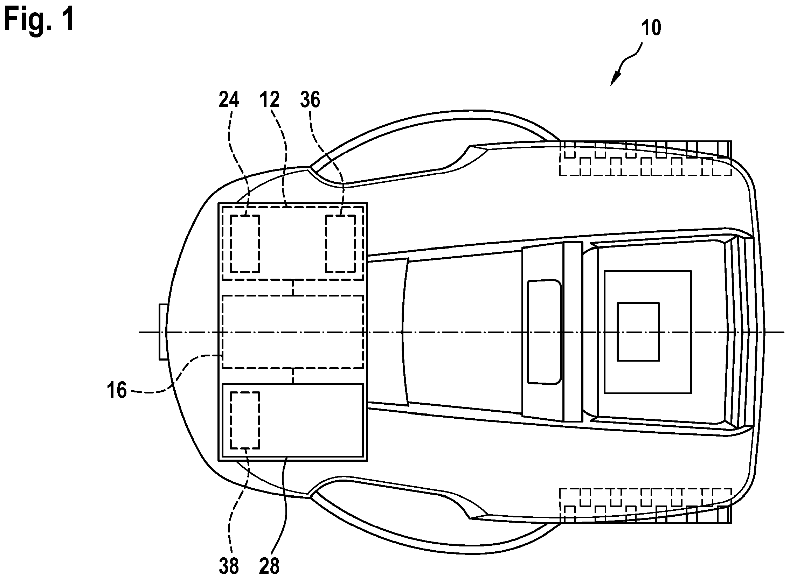

Figur 1 zeigt ein autonomes Arbeitsgerät 10. Das autonome Arbeitsgerät 10 ist als ein autonomer Rasenmäher ausgebildet. Das autonome Arbeitsgerät 10 ist als ein Rasenmähroboter ausgebildet. Grundsätzlich wäre jedoch auch eine andere, einem Fachmann als sinnvoll erscheinende Ausbildung denkbar. Das autonome Arbeitsgerät 10 weist eine Erfassungsvorrichtung 12 auf. Die Erfassungsvorrichtung 12 ist zu einer Erfassung eines initial definierten, temporären Arbeitsbereichs 14 vorgesehen. Die Erfassungsvorrichtung 12 ist zu einer Erfassung einer von einem Bediener 34 initial definierten Grenze 20, 22 des temporären Arbeitsbereichs 14 vorgesehen. Die Erfassungsvorrichtung 12 ist dazu vorgesehen einen Verlauf sowie eine Position der von einem Bediener 34 initial definierten Grenze 20, 22 des temporären Arbeitsbereichs 14 zu erfassen. Die Erfassungsvorrichtung 12 weist dazu eine Positionserfassungseinheit 36 auf. Die Positionserfassungseinheit 36 ist zu einer Erfassung einer absoluten Position des autonomen Arbeitsgeräts 10 vorgesehen. Grundsätzlich wäre jedoch auch denkbar, dass die Positionserfassungseinheit 36 lediglich zu einer Erfassung einer relativen Position des autonomen Arbeitsgeräts 10, wie beispielsweise relativ zu einer Basisstation des autonomen Arbeitsgeräts 10, vorgesehen ist. Es sind verschiedene, einem Fachmann als sinnvoll erscheinende Daten denkbar, welche die Positionserfassungseinheit 36 zu einer Erfassung einer relativen und/oder absoluten Position nutzen kann, wie beispielsweise GPS-Daten, Odometriedaten, Ultraschalldaten, Radardaten, Geschwindigkeitsdaten, LiDAR-Daten, Beacon-Daten und/oder Bilddaten. Die Positionserfassungseinheit 36 ist hier beispielhaft als eine GPS-Positionserfassungseinheit ausgebildet. Die Positionserfassungseinheit 36 ist dazu vorgesehen eine absolute Position der von einem Bediener 34 initial definierten Grenze 20, 22 des temporären Arbeitsbereichs 14 zu erfassen. Aus der Vielzahl von Einzelpositionen der Grenze 20, 22 des temporären Arbeitsbereichs 14 wird auf einen Verlauf der Grenze 20, 22 des temporären Arbeitsbereichs 14 rückgeschlossen.

Ferner weist die Erfassungsvorrichtung 12 eine Grenzerfassungseinheit 24 auf. Die Grenzerfassungseinheit 24 ist zu einer Erfassung einer Kenngröße einer Grenze 26 eines absoluten Arbeitsbereichs 18 vorgesehen ist. Die Grenzerfassungseinheit 24 ist zu einer Erfassung einer Position sowie eines Verlaufs einer natürlichen Grenze eines Arbeitsbereichs vorgesehen, welche die Grenze 26 des absoluten Arbeitsbereichs 18 definiert. Die Grenzerfassungseinheit 24 ist zu einer Erfassung einer Position sowie eines Verlaufs einer natürlichen Grenze, wie beispielsweise einer Rasengrenze, einer Treppenstufe, einer Mauer, eines Zauns oder einer Kante vor einem Abgrund, vorgesehen. Die Grenzerfassungseinheit 24 ist als eine optische Erfassungseinheit ausgebildet, welche zu einer optischen Erfassung natürlicher Grenzen vorgesehen ist. Grundsätzlich wäre jedoch auch eine andere, einem Fachmann als sinnvoll erscheinende Ausbildung der Grenzerfassungseinheit 24 denkbar, wie beispielsweise als eine LIDAR-, Ultraschall- oder Radar-Erfassungseinheit.

Des Weiteren weist das autonome Arbeitsgerät 10 eine Steuer- und Regeleinheit 16 auf. Die Steuer- und Regeleinheit 16 wird von einer Recheneinheit gebildet. Ferner ist die Steuer- und Regeleinheit 16 zu einer Kartierung eines den temporären Arbeitsbereich 14 zumindest im Wesentlichen aufweisenden absoluten Arbeitsbereichs 18 vorgesehen. Die Steuer- und Regeleinheit 16 ist zu einer temporären Kartierung des temporären Arbeitsbereichs 14 vorgesehen sowie zu einer Kartierung des absoluten Arbeitsbereichs 18 abhängig von dem temporären Arbeitsbereich 14. Der temporäre Arbeitsbereich 14 wird lediglich temporär für die Kartierung des absoluten Arbeitsbereichs 18 kartiert. Der absolute Arbeitsbereich 18 definiert einen endgültigen Arbeitsbereich des autonomen Arbeitsgeräts 10. Die Steuer- und Regeleinheit 16 ist dazu vorgesehen, bei der Kartierung des absoluten Arbeitsbereichs 18 zwischen harten Grenzen 20 des temporären Arbeitsbereichs 14 und weichen Grenzen 22 des temporären Arbeitsbereichs 14 zu unterscheiden. Die Grenzen 20, 22 des temporären Arbeitsbereichs 14 bestehen jeweils aus harten Grenzen 20 und weichen Grenzen 22. Grundsätzlich ist es jedoch auch möglich, dass die Grenze 20, 22 des temporären Arbeitsbereichs 14 teilweise auch lediglich aus einer harten Grenze 20 oder einer weichen Grenze 22 besteht. Die Erfassungsvorrichtung 12 ist mit der Steuer- und Regeleinheit 16 verbunden.

Ferner weist das autonome Arbeitsgerät 10 eine Eingabeeinheit 28 auf. Die Eingabeeinheit 28 ist zu einer manuellen Differenzierung zwischen einer weichen Grenze 22 und einer harten Grenze 20 des initial definierten, temporären Arbeitsbereichs 14 vorgesehen. Die Eingabeeinheit 28 ist während der initialen Definition des temporären Arbeitsbereichs 14 zu einer manuellen Differenzierung zwischen einer weichen Grenze 22 und einer harten Grenze 20 des temporären Arbeitsbereichs 14 vorgesehen. Mittel der Eingabeeinheit 28 kann während der initialen Definition des temporären Arbeitsbereichs 14, jeweils bevor ein Teilabschnitt einer Grenze definiert wird, eingegeben werden, ob es sich bei dem Teilabschnitt um eine weiche Grenze 22 oder eine harte Grenze 20 des temporären Arbeitsbereichs 14 handelt. Eine Eingabe kann direkt über nicht weiter sichtbare Tasten an der Eingabeeinheit 28 des autonomen Arbeitsgeräts 10 erfolgen. Alternativ kann eine Eingabe jedoch auch indirekt erfolgen. Die Eingabeeinheit 28 weist dazu ein Kommunikationsmodul 38 auf. Das Kommunikationsmodul 38 dient zu einer Kommunikation mit einem Bedienerendgerät 40. Das Kommunikationsmodul 38 ist von einem Bluetooth-Modul gebildet. Grundsätzlich wäre jedoch auch eine andere, einem Fachmann als sinnvoll erscheinende Ausbildung denkbar, wie beispielsweise als WLAN-Modul und/oder ein anderes Funk-Modul. Das Bedienerendgerät 40 ist beispielhaft als ein Smartphone ausgebildet. Über das Kommunikationsmodul 38 können Daten der Eingabeeinheit 28, wie insbesondere aktuell mögliche Eingabemöglichkeiten, auf das Bedienerendgerät 40 übertragen werden. Auf der anderen Seite können über das Kommunikationsmodul 38 an dem Bedienerendgerät 40 von einem Bediener 34 getätigte Eingaben empfangen werden. Die von einem Bediener 34 getätigten Eingaben können anschließend von der Eingabeeinheit 28 ausgewertet und an die Steuer- und Regeleinheit 16 übertragen werden. Die Eingabeeinheit 28 ist dazu mit der Steuer- und Regeleinheit 16 verbunden. Dadurch können Bedienereingaben vorteilhaft auch extern an einem Bedienerendgerät 40 erfolgen, sodass ein vorteilhaft hoher Komfort erreicht werden kann. Grundsätzlich wäre auch denkbar, dass das Kommunikationsmodul 38 zu einer direkten insbesondere verbalen Kommunikation mit dem Bediener 34 vorgesehen ist. Grundsätzlich wäre jedoch auch denkbar, dass die Eingabeeinheit 28 als eine von dem Rest des autonomen Arbeitsgeräts 10 getrennte Fernbedienung ausgeführt ist.

Die Steuer- und Regeleinheit 16 ist dazu vorgesehen, bei einer Kartierung des absoluten Arbeitsbereichs 18 eine weiche Grenze 22 des temporären Arbeitsbereichs 14 falls möglich an eine durch die Grenzerfassungseinheit 24 erfasste Grenze 26 anzupassen. Die Steuer- und Regeleinheit 16 ist dazu vorgesehen, bei einer Kartierung des absoluten Arbeitsbereichs 18 eine weiche Grenze 22 des temporären Arbeitsbereichs 14 in einem Nahbereich der weichen Grenze 22 durch eine durch die Grenzerfassungseinheit 24 erfasste Grenze zu korrigieren. Bei einer Kartierung des absoluten Arbeitsbereichs 18 wird die weiche Grenze 22 des temporären Arbeitsbereichs 14 in einem Nahbereich der weichen Grenze 22 durch eine durch die Grenzerfassungseinheit 24 erfasste Grenze ersetzt. Kann in dem Nahbereich der weichen Grenze 22 keine Grenze durch die Grenzerfassungseinheit 24 erfasst werden, wird die weiche Grenze 22 direkt als Grenze 26 des absoluten Arbeitsbereichs 18 übernommen. Die durch die Grenzerfassungseinheit 24 erfasste Grenze bildet daher eine Grenze 26 des absoluten Arbeitsbereichs 18.

Ferner ist die Steuer- und Regeleinheit 16 dazu vorgesehen, bei einer Kartierung des absoluten Arbeitsbereichs 18 eine harte Grenze 20 des temporären Arbeitsbereichs 14 als Grenze 26 des absoluten Arbeitsbereichs 18 zu übernehmen. An einer harten Grenze 20 des temporären Arbeitsbereichs 14 findet bei einer Kartierung des absoluten Arbeitsbereichs 18 durch die die Steuer- und Regeleinheit 16 keine automatische Korrektur dieser Grenze statt. Eine harte Grenze 20 des temporären Arbeitsbereichs 14 entspricht daher einer Grenze 26 des absoluten Arbeitsbereichs 18. Die Grenze 26 des absoluten Arbeitsbereichs 18 kann dabei in Teilbereichen aus direkt übernommenen harten Grenzen 20 des temporären Arbeitsbereichs 14 sowie in Teilbereichen aus korrigierten, weichen Grenzen 22 des temporären Arbeitsbereichs 14 bestehen.

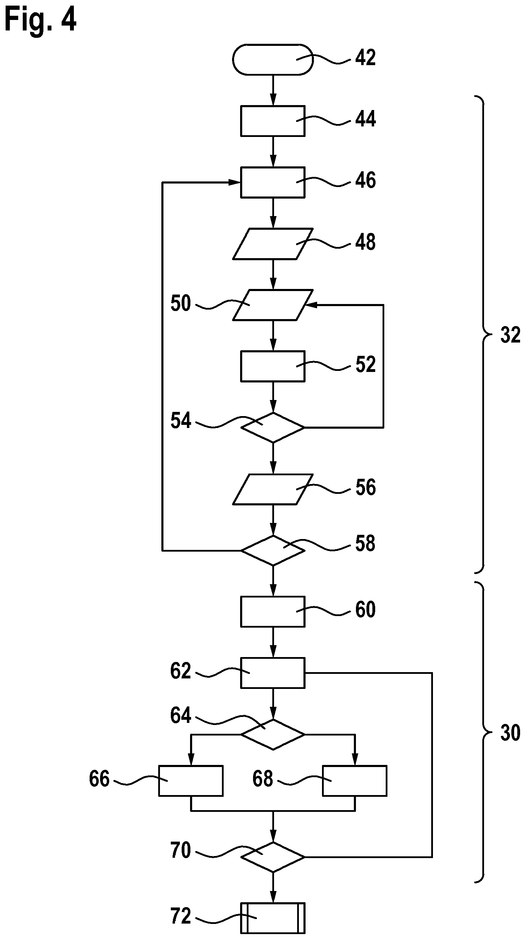

Figur 4 zeigt ein Ablaufdiagramm eines Verfahrens zum Betrieb des autonomen Arbeitsgeräts 10. Das Verfahren beginnt mit einem Start 42 nach einem Reset des autonomen Arbeitsgeräts 10 oder bei einer ersten Inbetriebnahme des autonomen Arbeitsgeräts 10. Nach dem Start 42 folgt eine initiale Phase 32. Bei dem Verfahren wird in der einer Einlernphase 30 vorangehenden initialen Phase 32 der temporäre Arbeitsbereich 14 des autonomen Arbeitsgeräts 10 definiert. Dazu wird in einem ersten Schritt 44 das Bedienerendgerät 40 über das Kommunikationsmodul 38 mit dem autonomen Arbeitsgerät 10 verbunden. Anschließend wird das autonome Arbeitsgerät 10 in einem weiteren Schritt 46 von dem Bediener 34 mittels des Bedienerendgeräts 40 an eine Grenze 20, 22 des temporären Arbeitsbereichs 14 navigiert oder manuell getragen.

Darauffolgend startet der Bediener 34 mittels einer Eingabe 48 eine Grenzabfahrt des autonomen Arbeitsgeräts 10. Bei der Grenzabfahrt wird das autonome Arbeitsgerät 10 von dem Bediener 34 mittels des Bedienerendgeräts 40 entlang der Grenze 20, 22 des temporären Arbeitsbereichs 14 navigiert. Eine Navigation des autonomen Arbeitsgeräts 10 erfolgt dabei durch Fernsteuerung mittels des Bedienerendgeräts 40. Es sind dabei verschiedene Arten der Navigation denkbar, wie sie beispielsweise bereits von Spielzeugfahrzeugen mit Smartphone-Steuerung bekannt ist. Das autonome Arbeitsgerät 10 kann jedoch grundsätzlich auch direkt an der Eingabeeinheit 28 gesteuert werden. Hierbei würde der Schritt 44 entfallen. Grundsätzlich wäre jedoch auch eine andere, einem Fachmann als sinnvoll erscheinende Art der Navigation denkbar. Eine mögliche alternative Art der Navigation kann beispielsweise durch Abschreiten der Grenze 20, 22 des temporären Arbeitsbereichs 14 durch den Bediener 34 erfolgen, wobei das autonome Arbeitsgerät 10 dem Bediener 34 dabei automatisch folgt. Eine weitere mögliche Art der Navigation kann beispielsweise durch Schieben des autonomen Arbeitsgeräts 10 entlang einer Grenze 20, 22 des temporären Arbeitsbereichs 14, insbesondere beispielsweise mit einer Schubstange, erfolgen. Vor der eigentlichen Navigation findet eine weitere Eingabe 50 des Bedieners 34 statt, bei der von dem Bediener 34 ausgewählt wird, ob es sich bei dem nachfolgend abgefahrenen Grenzabschnitt um eine weiche Grenze 22 des temporären Arbeitsbereichs 14 oder eine harte Grenze 20 des temporären Arbeitsbereichs 14 handelt. Es wird daher in der initialen Phase 32 manuell eine Grenze 20, 22 des temporären Arbeitsbereichs 14 als weiche Grenze 22 oder als harte Grenze 20 definiert. Wird von dem Bediener 34 eine harte Grenze 20 ausgewählt, wird dem Bediener 34 von dem autonomen Arbeitsgerät 10 automatisch eine Liste möglicher Arten Gefahrenstellen angezeigt, welche von der harten Grenze 20 umschlossen werden soll. Diese Liste umfasst beispielsweise Teiche, Schwimmbäder, Bäche, Blumen, die nicht gemäht werden sollen oder gefährliches Terrain. Grundsätzlich wäre dadurch zudem denkbar, dass dem autonomen Arbeitsgerät 10 lediglich die Gefahrenstelle gezeigt werden muss und dieses selbsttätig eine harte Grenze 20 um die Gefahrenstelle erfasst. Anschließend wird das das autonome Arbeitsgerät 10 in einem weiteren Schritt 52 von dem Bediener 34 mittels des Bedienerendgeräts 40 entlang der Grenze 20, 22 des temporären Arbeitsbereichs 14 navigiert. Das autonome Arbeitsgerät 10 wird daher in der initialen Phase 32, zu einer Definition des temporären Arbeitsbereichs 14, manuell entlang der Grenze 20, 22 des temporären Arbeitsbereichs 14 navigiert. Dabei wird über die Erfassungsvorrichtung 12 eine Position sowie ein Verlauf der Grenze 20, 22 des temporären Arbeitsbereichs 14 erfasst und an die Steuer- und Regeleinheit 16 übertragen. Die Steuer- und Regeleinheit 16 kartiert dabei in Echtzeit den aktuell abgefahren Grenzabschnitt des temporären Arbeitsbereichs 14, wobei zu jedem kartierten Grenzabschnitt jeweils eine Art der Grenze 20, 22, also ob es sich dabei um eine weiche Grenze 22 oder eine harte Grenze 20 handelt, hinterlegt wird. Ferner wird bei harten Grenzen 20 zudem eine Art der Gefahrenstelle hinterlegt. Hierdurch kann insbesondere erreicht werden, dass das autonome Arbeitsgerät 10 bei einem regulären Betrieb in einer Umgebung der harten Grenze 20 bereits gezielt versucht die Gefahrenstelle zu detektieren, um bei Fehlern in der Positionserfassung die Gefahrenstellung trotz allem sicher umfahren zu können. Anschließend wird von der Steuer- und Regeleinheit 16 in einer Verzweigung 54 überprüft, ob die Grenze 20, 22 geschlossen ist. Ist die Grenze 20, 22 nicht geschlossen, wird erneut die Eingabe 50 überprüft und der Schritt 52 wiederholt. Ist die Grenze 20, 22 geschlossen, wird mittels einer Ein- und Ausgabe 56 einem Bediener 34 die Auswahl gegeben, eine weitere Grenze 20, 22, wie beispielsweise eine Innengrenze, zu kartieren, oder die initiale Phase 32 zu beenden. Anschließend wird von der Steuer- und Regeleinheit 16 in einer Verzweigung 58 eine Eingabe des Bedieners 34 überprüft. Möchte der Bediener 34 eine weitere Grenze 20, 22 kartieren, wird das Verfahren von dem Schritt 46 an wiederholt. Wird die initiale Phase 32 von dem Bediener 34 beendet, startet die Einlernphase 30. Zudem wäre hierbei denkbar, dass bei einem Bediener 34 angefragt wird, ob sich noch weitere Gefahrenstellen in dem temporären Arbeitsbereich 14 befinden. Antwortet der Bediener 34 hier mit nein, kann insbesondere während der Einlernphase 30 auf eine Detektion von Gefahrenstellen verzichtet werden. Ferner wäre zudem denkbar, dass insbesondere bei mehreren getrennten Arbeitsbereichen dem autonomen Arbeitsgerät 10 in der initialen Phase 32 von dem Bediener 34 Pfade, wie beispielsweise über Wege oder Terrassen, zwischen den Arbeitsbereichen vorgegeben werden können. Grundsätzlich wäre jedoch auch denkbar, dass in der initialen Phase 32 der temporäre Arbeitsbereich 14 mittels Landmarken definiert wird. Dabei wäre insbesondere denkbar, dass in der initialen Phase 32 lediglich von einem Bediener 34 Landmarken auf den Grenzen 20, 22 des temporären Arbeitsbereichs 14 verteilt werden müssen. Ferner wäre dabei denkbar, dass hierfür zwei verschiedene Arten von Landmarken verwendet werden. Eine Art von Landmarken wird für die Definition von harten Grenzen 20 verwendet und eine Art von Landmarken wird für die Definition von weichen Grenzen 22 verwendet. Zudem wäre dabei insbesondere denkbar, dass die Landmarken nach der Einlernphase 30 entfernt werden können.

In der Einlernphase 30 wird ein den initial definierten, temporären Arbeitsbereich 14 aufweisender absoluter Arbeitsbereich 18 von dem autonomen Arbeitsgerät 10 selbsttätig kartiert. Während der Kartierung des absoluten Arbeitsbereichs 18 wird zwischen harten Grenzen 20 des temporären Arbeitsbereichs 14 und weichen Grenzen 22 des temporären Arbeitsbereichs 14 unterschieden. In der Einlernphase 30 navigiert das autonome Arbeitsgerät 10 selbsttätig. Das autonome Arbeitsgerät 10 übernimmt in der Einlernphase 30 eine harte Grenze 20 des temporären Arbeitsbereichs 14 als Grenze 26 des absoluten Arbeitsbereichs 18. Dazu werden in einem ersten Schritt 60 der Einlernphase 30 von der Steuer- und Regeleinheit 16 die kartierten Grenzabschnitte des temporären Arbeitsbereichs 14, welche als harte Grenzen 20 hinterlegt sind, direkt als eine Grenze 26 des absoluten Arbeitsbereichs 18 übernommen. Anschließend navigiert sich das autonome Arbeitsgerät 10 in einem weiteren Schritt 62 selbsttätig an einen kartierten Grenzabschnitt des temporären Arbeitsbereichs 14, welcher als weiche Grenze 22 hinterlegt ist, und sucht, sofern von Umgebungssensoren des autonomen Arbeitsgeräts 10 keine Gefahren angezeigt werden, in einem Nahbereich der weichen Grenze 22 mittels der Grenzerfassungseinheit 24 nach einer natürlichen Grenzen. Darauffolgend wird in einer Verzweigung 64 geprüft, ob in dem Nahbereich der weichen Grenze 22 eine natürliche Grenze erfasst werden konnte. Konnte eine natürliche Grenze erfasst werden, wird in diesem Grenzabschnitt in einem weiteren Schritt 66 die Grenze 26 des absoluten Arbeitsbereichs 18 in dem Nahbereich der weichen Grenze 22 an die natürliche Grenze anpasst. Die natürliche Grenze wird dabei als Grenze 26 des absoluten Arbeitsbereichs 18 übernommen. Konnte keine natürliche Grenze in dem Nahbereich der weichen Grenze 22 erfasst werden, wird in einem weiteren Schritt 68 die weiche Grenze 22 in diesem Grenzabschnitt als Grenze 26 des absoluten Arbeitsbereichs 18 übernommen. Das autonome Arbeitsgerät 10 korrigiert daher in der Einlernphase 30 eine weiche Grenze 22 des temporären Arbeitsbereichs 14 bei einer Kartierung der Grenze 26 des absoluten Arbeitsbereichs 18 selbsttätig. Das autonome Arbeitsgerät 10 passt in der Einlernphase 30 eine Grenze 26 des absoluten Arbeitsbereichs 14 in einem Nahbereich der weichen Grenze 22 des temporären Arbeitsbereichs 14 an eine natürliche Grenze an. Anschließend wird von dem autonomen Arbeitsgerät 10 in einer Verzweigung 70 überprüft, ob noch Grenzabschnitte des temporären Arbeitsbereichs 14, welche als weiche Grenzen 22 hinterlegt sind, vorhanden sind, die noch nicht bei einer Kartierung der Grenze 26 des absoluten Arbeitsbereichs 18 verarbeitet wurden. Sind noch Grenzabschnitte vorhanden, wird das Verfahren mit dem Schritt 62 fortgesetzt. Sind keine Grenzabschnitte mehr vorhanden, wurde der absolute Arbeitsbereich 18 vollständig kartiert und es beginnt eine reguläre Betriebsphase 72. Grundsätzlich kann das autonome Arbeitsgerät 10 auch mehrere Korrekturdurchläufe durchführen, um eine Genauigkeit zu verbessern. Grundsätzlich wäre auch denkbar, dass die Einlernphase 30 auch während der regulären Betriebsphase 72 zumindest teilweise weitergeführt wird, wobei eine mögliche Änderung des absoluten Arbeitsbereichs 18 jeweils, beispielsweise durch SMS, E-Mail oder dergleichen, bei dem Bediener 34 angefragt wird. Hierdurch können insbesondere beispielsweise Änderungen der Gartengeometrie, z.B. durch Pflanzenwachstum, berücksichtigt werden.

In der regulären Betriebsphase 72 findet ein regulärer Mähbetrieb statt, in welchem sich das autonome Arbeitsgerät 10 selbsttätig in dem absoluten Arbeitsbereich 18 navigiert, um diesen zu mähen. Während der regulären Betriebsphase 72 kann der absolute Arbeitsbereich 18 weiter korrigiert werden. Werden während der regulären Betriebsphase 72 Gegenstände 74, wie beispielsweise Bäume oder Felsen, innerhalb des absoluten Arbeitsbereichs 18 erfasst, können diese ebenfalls kartiert werden. Ferner wird bei dem Anfahren von Grenzabschnitten der Grenze 26 des absoluten Arbeitsbereichs 18, welche während der Einlernphase 30 an eine natürliche Grenze angepasst wurden, nochmals mittels der Grenzerfassungseinheit 24 geprüft, ob sich dort noch immer eine natürliche Grenze befindet. Befindet sich dort keine natürliche Grenze mehr, wird die Grenze 26 erneut an eine aktuelle natürliche Grenze angepasst. Hierbei wird jedoch lediglich ein wesentlich geringer Nahbereich nach einer natürlichen Grenze abgesucht. Eine Quererstreckung des Nahbereichs beträgt hier beispielhaft 20 cm. So können vorteilhaft sich verändernde Rasengrenzen automatisch in dem absoluten Arbeitsbereich 18 korrigiert werden. Des Weiteren kann in regelmäßigen Abschnitten auch an Grenzabschnitten der Grenze 26 des absoluten Arbeitsbereichs 18, bei welchen die weiche Grenze 22 des temporären Arbeitsbereichs 14 übernommen wurden, geprüft werden, ob sich inzwischen in dem Nahbereich der weichen Grenze 22 eine natürliche Grenze befindet. Zudem wäre auch denkbar, dass eine Karte des absoluten Arbeitsbereichs 18 an den Bediener 34 ausgegeben werden kann, wobei der Bediener 34 selbsttätig die Grenzen 26 des absoluten Arbeitsbereichs 18 ändern kann.

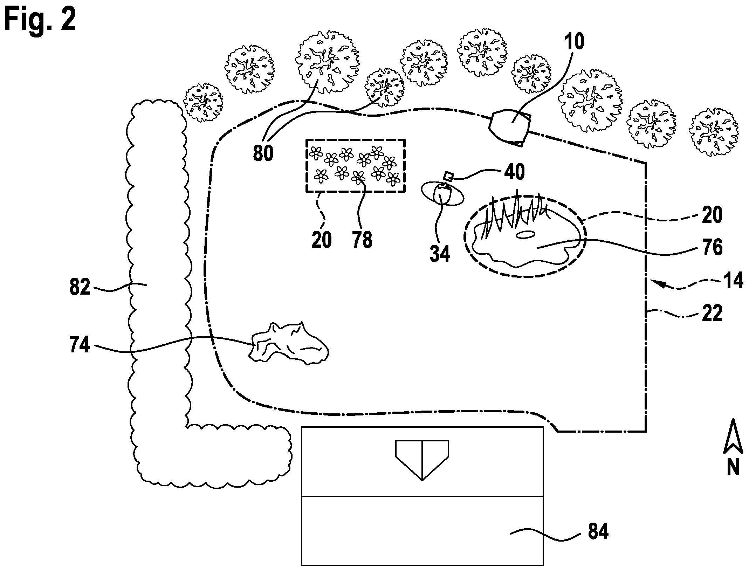

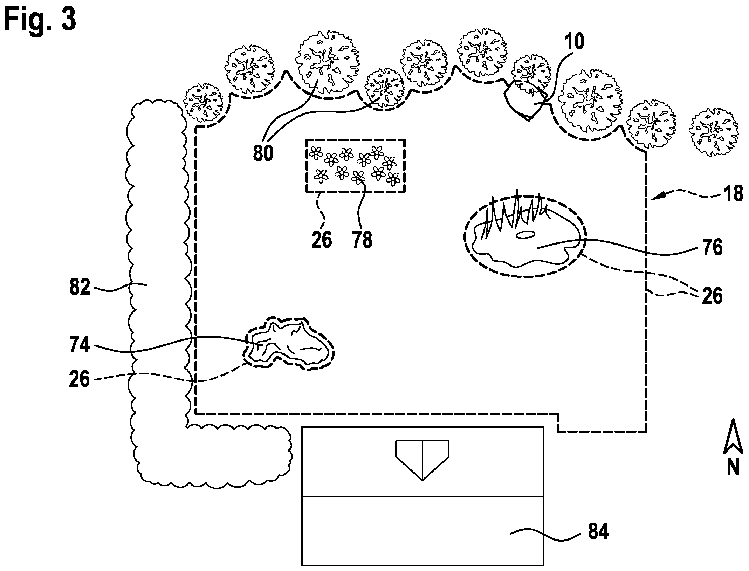

Während der initialen Phase 32 kann der Bediener 34 den Arbeitsbereich des autonomen Arbeitsgeräts 10 definieren. Um jedoch einen vorteilhaft hohen Komfort zu erreichen, muss der Bediener 34 die weichen Grenzen 22 des temporären Arbeitsbereichs 14 lediglich sehr grob abfahren, da hier von dem autonomen Arbeitsgerät 10 selbsttätig eine Korrektur anhand von natürlichen Grenzen vorgenommen wird. Um jedoch zu verhindern, dass das autonome Gerät bei der Korrektur in Gefahrenstellen oder in Bereiche die, nicht gemäht werden sollen, fährt, können von dem Bediener 34 die harten Grenzen 20 definiert werden. In den Figuren 2 und 3 ist ein beispielhafter Garten dargestellt. Figur 2 zeigt die initiale Phase 32. Der Bediener 34 kann in diesem Beispiel in der initialen Phase 32 die Außengrenze des Gartens lediglich sehr grob abfahren und diese als weiche Grenze 22 definieren. Innerhalb des Gartens befinden sich jedoch sowohl ein Teich 76 als auch ein Blumenbeet 78. Bei dem Teich 76 besteht die Gefahr, dass das autonome Arbeitsgerät 10 den Teich 76 nicht selbsttätig erkennt, dies kann insbesondere bei Teichen 76 mit einem hohen Algenanteil passieren. Um daher zu verhindern, dass das autonome Arbeitsgerät 10 in dem Teich 76 fährt, kann der Bediener 34 in der initialen Phase 32 die Kontur des Teiches 76 genau abfahren und diese Kontur als harte Grenze 20 definieren. Hierdurch wird verhindert, dass das autonome Arbeitsgerät 10 die harte Grenze 20, welche später als Grenze 26 des absoluten Arbeitsbereichs 18 übernommen wird, in der Einlernphase 30 oder einem regulären Betrieb überfährt. Bei dem Blumenbeet 78 kann mittels der harten Grenze 20 verhindert werden, dass das autonome Arbeitsgerät 10 in das Blumenbeet 78 fährt und Blumen zerstört.

Figur 3 zeigt die Einlernphase 30. In der Einlernphase 30 werden die harten Grenzen 20 um den Teich 76 sowie um das Blumenbeet 78 direkt als Grenzen 26 des absoluten Arbeitsbereichs 18 übernommen. Im Norden wird bei einer Kartierung des absoluten Arbeitsbereichs 18 eine Grenze 26 in einem Nahbereich der weichen Grenze 22 selbsttätig an die natürliche Rasengrenze unter Bäumen 80 angepasst. Im Westen wird bei einer Kartierung des absoluten Arbeitsbereichs 18 eine Grenze 26 in einem Nahbereich der weichen Grenze 22 selbsttätig an die natürliche Rasengrenze an einer Hecke 82 angepasst. Im Süden wird bei einer Kartierung des absoluten Arbeitsbereichs 18 eine Grenze 26 in einem Nahbereich der weichen Grenze 22 selbsttätig an die durch die Hauswand eines Hauses 84 gebildete natürliche Grenze angepasst. Im Osten gibt es lediglich eine Grün-Grün-Grenze, sodass von dem autonomen Arbeitsgerät 10 versucht wird, die weiche Grenze 22 zu korrigieren, da jedoch in dem Nahbereich der weichen Grenze 22 keine natürliche Grenze vorhanden ist, wird die weiche Grenze 22 in diesem Bereich als Grenze 26 des absoluten Arbeitsbereichs 18 übernommen.

## Patentansprüche

1. Autonomes Arbeitsgerät, insbesondere autonomer Rasenmäher, mit zumindest einer Erfassungsvorrichtung (12), welche zu einer Erfassung eines initial definierten, temporären Arbeitsbereichs (14) vorgesehen ist, und mit zumindest einer Steuer- und/oder Regeleinheit (16), welche zu einer zumindest teilweisen Kartierung eines den temporären Arbeitsbereich (14) zumindest im Wesentlichen aufweisenden absoluten Arbeitsbereichs (18) vorgesehen ist, wobei die Steuer-und/oder Regeleinheit (16) dazu vorgesehen ist, bei der Kartierung des absoluten Arbeitsbereichs (18) zwischen harten Grenzen (20) des temporären Arbeitsbereichs (14) und weichen Grenzen (22) des temporären Arbeitsbereichs (14), zu unterscheiden, wobei die zumindest eine Erfassungsvorrichtung (12) zumindest eine Grenzerfassungseinheit (24) aufweist, welche zu einer Erfassung zumindest einer Kenngröße einer Grenze (26) des absoluten Arbeitsbereichs (18) vorgesehen ist, **dadurch gekennzeichnet, dass** die weichen Grenzen (22) des temporären Arbeitsbereichs (14) zumindest einen Teilbereich einer Grenze des temporären Arbeitsbereichs (14) definieren, welcher von der Steuer- und/oder Regeleinheit (16) als grob definierte, korrigierbare Grenze angesehen wird, wobei die Steuer- und/oder Regeleinheit (16) dazu vorgesehen ist, bei einer Kartierung des absoluten Arbeitsbereichs (18) die weiche Grenze (22) des temporären Arbeitsbereichs (14) durch eine durch die Grenzerfassungseinheit (24) erfasste Grenze zu korrigieren.

2. Autonomes Arbeitsgerät nach Anspruch 1, **dadurch gekennzeichnet, dass** die Steuer- und/oder Regeleinheit (16) dazu vorgesehen ist, bei einer Kartierung des absoluten Arbeitsbereichs (18) eine harte Grenze (20) des temporären Arbeitsbereichs (14) als Grenze (26) des absoluten Arbeitsbereichs (18) zu übernehmen.

3. Autonomes Arbeitsgerät nach einem der vorhergehenden Ansprüche, **gekennzeichnet durch** zumindest eine Eingabeeinheit (28), welche zu einer manuellen Differenzierung zwischen einer weichen Grenze (22) und einer harten Grenze (20) des initial definierten, temporären Arbeitsbereichs (14) vorgesehen ist.

4. Verfahren zum Betrieb eines autonomen Arbeitsgeräts, insbesondere nach einem der vorhergehenden Ansprüche, wobei in einer Einlernphase (30) ein einen initial definierten, temporären Arbeitsbereich (14) aufweisender absoluter Arbeitsbereich (18) von dem autonomen Arbeitsgerät (10) selbsttätig zumindest teilweise kartiert wird und während der Kartierung des absoluten Arbeitsbereichs (18) zwischen harten Grenzen (20) des temporären Arbeitsbereichs (14) und weichen Grenzen (22) des temporären Arbeitsbereichs (14) unterschieden wird, **dadurch gekennzeichnet, dass** das autonome Arbeitsgerät (10) zumindest in der Einlernphase (30) eine weiche Grenze (22) des temporären Arbeitsbereichs (14) bei einer Kartierung der Grenze (26) des absoluten Arbeitsbereichs (18) selbsttätig korrigiert.

5. Verfahren nach Anspruch 4, **dadurch gekennzeichnet, dass** in einer der Einlernphase (30) vorangehenden initialen Phase (32) der temporäre Arbeitsbereich (14) des autonomen Arbeitsgeräts (10) definiert wird.

6. Verfahren nach Anspruch 5, **dadurch gekennzeichnet, dass** in der initialen Phase (32) zu einer Definition des temporären Arbeitsbereichs (14) das autonome Arbeitsgerät (10) manuell entlang einer Grenze (20, 22) des temporären Arbeitsbereichs (14) navigiert wird.

7. Verfahren nach Anspruch 5 oder 6, **dadurch gekennzeichnet, dass** in der initialen Phase (32) manuell eine Grenze (20, 22) des temporären Arbeitsbereichs (14) als weiche Grenze (22) oder als harte Grenze (20) definiert wird.

8. Verfahren nach Anspruch 4, **dadurch gekennzeichnet, dass** das autonome Arbeitsgerät (10) zumindest in der Einlernphase (30) eine Grenze (26) des absoluten Arbeitsbereichs (18) in einem Nahbereich der weichen Grenze (22) des temporären Arbeitsbereichs (14) an eine natürliche Grenze anpasst.

9. Verfahren nach einem der Ansprüche 4 bis 8, **dadurch gekennzeichnet, dass** das autonome Arbeitsgerät (10) zumindest in der Einlernphase (30) eine harte Grenze (20) des temporären Arbeitsbereichs (14) als Grenze (26) des absoluten Arbeitsbereichs (18) übernimmt.

## Claims

1. Autonomous working device, in particular autonomous lawnmower, comprising at least one detection apparatus (12) which is intended to detect an initially defined, temporary working region (14), and comprising at least one open-loop and/or closed-loop control unit (16) which is intended to at least partially map an absolute working region (18) that at least substantially includes the temporary working region (14), wherein the open-loop and/or closed-loop control unit (16) is intended to distinguish between hard boundaries (20) of the temporary working region (14) and soft boundaries (22) of the temporary working region (14) when mapping the absolute working region (18), wherein the at least one detection apparatus (12) has at least one boundary detecting unit (24) which is intended to detect at least one characteristic variable of a boundary (26) of the absolute working region (18), **characterized in that** the soft boundaries (22) of the temporary working region (14) define at least a subregion of a boundary of the temporary working region (14), which subregion is considered to be a roughly defined, correctable boundary by the open-loop and/or closed-loop control unit (16), wherein the open-loop and/or closed-loop control unit (16) is intended to correcting the soft boundary (22) of the temporary working region (14) by a boundary that is detected by the boundary detecting unit (24) when mapping the absolute working region (18).

2. Autonomous working device according to Claim 1, **characterized in that** the open-loop and/or closed-loop control unit (16) is intended to adopt a hard boundary (20) of the temporary working region (14) as a boundary (26) of the absolute working region (18) when mapping the absolute working region (18).

3. Autonomous working device according to either of the preceding claims, **characterized by** at least one input unit (28) which is intended to manually differentiate between a soft boundary (22) and a hard boundary (20) of the initially defined, temporary working region (14).

4. Method for operating an autonomous working device, in particular according to one of the preceding claims, wherein, in a learning phase (30), an absolute working region (18) that has an initially defined, temporary working region (14) is automatically at least partially mapped by the autonomous working device (10) and a distinction is made between hard boundaries (20) of the temporary working region (14) and soft boundaries (22) of the temporary working region (14) during mapping of the absolute working region (18), **characterized in that** the autonomous working device (10), at least in the learning phase (30), automatically corrects a soft boundary (22) of the temporary working region (14) when mapping the boundary (26) of the absolute working region (18) .

5. Method according to Claim 4, **characterized in that** the temporary working region (14) of the autonomous working device (10) is defined in an initial phase (32) that precedes the learning phase (30).

6. Method according to Claim 5, **characterized in that** the autonomous working device (10) is manually navigated along a boundary (20, 22) of the temporary working region (14) in the initial phase (32) for defining the temporary working region (14).

7. Method according to Claim 5 or 6, **characterized in that** a boundary (20, 22) of the temporary working region (14) is manually defined as a soft boundary (22) or as a hard boundary (20) in the initial phase (32).

8. Method according to Claim 4, **characterized in that** the autonomous working device (10), at least in the learning phase (30), adapts a boundary (26) of the absolute working region (18) in a close region of the soft boundary (22) of the temporary working region (14) to a natural boundary.

9. Method according to one of Claims 4 to 8, **characterized in that** the autonomous working device (10), at least in the learning phase (30), adopts a hard boundary (20) of the temporary working region (14) as a boundary (26) of the absolute working region (18).

## Revendications

1. Outil de travail autonome, en particulier une tondeuse autonome, comprenant au moins un dispositif de détection (12) qui est prévu pour une détection d'une zone de travail temporaire (14) initialement définie, et au moins une unité de commande et/ou de régulation (16) qui est prévue pour réaliser une cartographie au moins partielle d'une zone de travail absolue (18) présentant au moins substantiellement la zone de travail temporaire (14), dans lequel, lors de la réalisation de la cartographie de la zone de travail absolue (18), l'unité de commande et/ou de régulation (16) est prévue pour distinguer entre des limites dures (20) de la zone de travail temporaire (14) et des limites souples (22) de la zone de travail temporaire (14), ledit au moins un dispositif de détection (12) présentant au moins une unité de détection de limite (24) qui est prévue pour une détection d'au moins une grandeur caractéristique d'une limite (26) de la zone de travail absolue (18),
**caractérisé en ce que** les limites souples (22) de la zone de travail temporaire (14) définissent au moins une zone partielle d'une limite de la zone de travail temporaire (14) qui est considérée par l'unité de commande et/ou de régulation (16) comme une limite définie grossièrement et pouvant être corrigée, dans lequel, lors de la réalisation d'une cartographie de la zone de travail absolue (18), l'unité de commande et/ou de régulation (16) est prévue pour corriger la limite souple (22) de la zone de travail temporaire (14) par une limite détectée par l'unité de détection de limite (24) .

2. Outil de travail autonome selon la revendication 1, **caractérisé en ce que** lors de la réalisation d'une cartographie de la zone de travail absolue (18), l'unité de commande et/ou de régulation (16) est prévue pour adopter une limite dure (20) de la zone de travail temporaire (14) comme une limite (26) de la zone de travail absolue (18).

3. Outil de travail autonome selon l'une quelconque des revendications précédentes, **caractérisé par** au moins une unité d'entrée (28) qui est prévue pour une différenciation manuelle entre une limite souple (22) et une limite dure (20) de la zone de travail temporaire (14) initialement définie.

4. Procédé d'exploitation d'un outil de travail autonome, en particulier selon l'une quelconque des revendications précédentes, dans lequel, dans une phase d'apprentissage (30), une zone de travail absolue (18) présentant une zone de travail temporaire (14) initialement définie est au moins partiellement cartographiée automatiquement par l'outil de travail autonome (10), et pendant la réalisation de la cartographie de la zone de travail absolue (18), des limites dures (20) de la zone de travail temporaire (14) et des limites souples (22) de la zone de travail temporaire (14) sont distinguées,
**caractérisé en ce que** l'outil de travail autonome (10), au moins dans la phase d'apprentissage (30), corrige automatiquement une limite souple (22) de la zone de travail temporaire (14) lors de la réalisation d'une cartographie de la limite (26) de la zone de travail absolue (18).

5. Procédé selon la revendication 4, **caractérisé en ce que** dans une phase initiale (32) précédant la phase d'apprentissage (30), la zone de travail temporaire (14) de l'outil de travail autonome (10) est définie.

6. Procédé selon la revendication 5, **caractérisé en ce que** dans la phase initiale (32), l'outil de travail autonome (10) est piloté manuellement le long d'une limite (20, 22) de la zone de travail temporaire (14) afin de définir la zone de travail temporaire (14).

7. Procédé selon la revendication 5 ou 6, **caractérisé en ce que**, dans la phase initiale (32), une limite (20, 22) de la zone de travail temporaire (14) est définie manuellement comme une limite souple (22) ou comme une limite dure (20).

8. Procédé selon la revendication 4, **caractérisé en ce que** l'outil de travail autonome (10), au moins dans la phase d'apprentissage (30), adapte une limite (26) de la zone de travail absolue (18) dans une zone proche de la limite souple (22) de la zone de travail temporaire (14) à une limite naturelle.

9. Procédé selon l'une quelconque des revendications 4 à 8, **caractérisé en ce que** l'outil de travail autonome (10) adopte, au moins dans la phase d'apprentissage (30), une limite dure (20) de la zone de travail temporaire (14) comme une limite (26) de la zone de travail absolue (18).
